# EUROPÄISCHE PATENTSCHRIFT

(11) **EP 2 435 246 B1**
(45) Veröffentlichungstag und Bekanntmachung des Hinweises auf die Patenterteilung: **19.12.2012**
(21) Anmeldenummer: 10712069.3
(22) Anmeldetag: 31.03.2010
(51) Int. Cl.: B32B 7/12, B32B 15/08, B32B 15/088, C09J 5/06, C08J 5/12, C09J 177/02, C09J 177/00, B29C 65/02

(54) **HYBRIDBAUTEILE MIT REAKTIVEN SCHMELZKLEBSTOFFEN**
HYBRID COMPONENTS CONTAINING REACTIVE HOT MELT ADHESIVES
COMPOSANTS HYBRIDES CONTENANT DES MATIÈRES ADHÉSIVES À FONDRE RÉACTIVES

(30) Priorität: 27.05.2009 DE 102009026493; 17.06.2009 DE 102009026988
(43) Veröffentlichungstag der Anmeldung: 04.04.2012
(73) Patentinhaber: Evonik Degussa GmbH, 45128 Essen (DE)
(72) Erfinder: PAWLIK, Andreas, 45657 Recklinghausen (DE); RISTHAUS, Martin, 59399 Olfen (DE); FRITZ, Jochen, 45721 Haltern am See (DE)
(86) Internationale Anmeldenummer: PCT/EP2010/054270
(87) Internationale Veröffentlichungsnummer: WO 2010/136241

(56) Entgegenhaltungen:
- EP-A2- 1 808 468
- WO-A2-2005/061203
- DE-B- 1 225 081

## Beschreibung

Die Erfindungsmeldung beschreibt den Einsatz von reaktiven Schmelzklebstoffen in Strukturbauteilen. Strukturbauteile sind Komponenten mit untergeordneten Sichtanforderungen, die im Fahrzeugbau sowie im Flugzeugbau im Bereich tragender Teile sowie kraftaufnehmender Teile zum Einsatz kommen und sich insbesondere dadurch auszeichnen, dass sie lokale Verstärkungen aufweisen, die dem Bauteil besondere mechanische Eigenschaften verleihen. Besonders hervorzuheben ist die Erhöhung der Torsionssteifigkeit bei zusätzlicher Gewichtsreduzierung verglichen mit bisher eingesetzten Komponenten.

Die in dieser Erfindungsmeldung beschriebenen Hybridbauteile zeichnen sich besonders dadurch aus, dass sie aus einem Verbund aus vornehmlich Metallen mit Polymeren bestehen. Hierbei wird in ein Metallbauteil eine Polymerstruktur mittels Spritzgußverfahren eingefügt, die dem Bauteil die entsprechende Torsions- und Crashsteifigkeit verleiht bei zusätzlich vergleichsweise geringem Gewicht.

Der Schwachpunkt dieser beschriebenen Hybridbauteile war bisher die Anbindung des Polymers an den metallischen Werkstoff. Hier entsteht durch Materialschrumpf und unterschiedliche Ausdehnungskoeffizienten der verschiedenen Materialien eine Enthaftung der Komponenten, was zur Verschlechterung der mechanischen Eigenschaften führt. Derzeit werden strukturbildende Hybridbauteile in der Weise produziert, dass in einen metallischen Werkstoff ein polymerer Werkstoff mittels Spritzgusstechnik eingespritzt wird. Das Problem dieser Stoffverbindung stellt der Übergang zwischen dem Polymer und dem Metall dar, da die Materialien unterschiedliche mechanische Eigenschaften aufweisen, welche dazu führen, dass die Festigkeit des Verbundes z.B. durch Schwindung des Polymers negativ beeinflusst wird und somit die Torsionssteifigkeit der Bauteile ebenso negativ beeinflusst wird.

In der EP1808468 der Evonik Degussa GmbH wird eine durch Vorbeschichtung des metallischen Bauteils mit aufbauenden, auf Laurinlactam basierenden

Schmelzklebstoffen wesentlich bessere Anbindung der beiden Komponenten und eine verbesserte Korrosionsbeständigkeit der Hybridbauteile beschrieben. Dieser Effekt kann noch verbessert werden, wenn dem verwendeten Schmelzklebstoff zusätzlich blockierte Isocyanate, die aufbauend im Molekulargewicht wirken sowie Epoxide, die haftverbessernd und vernetzend wirken, zugesetzt werden. Der Molekulargewichtsaufbau wird durch die für das Bauteil aus Korrosionsschutzgründen notwendige Kathodische Tauchlackierung (KTL) gefördert, da die Verweilzeit von mehr als 25 Minuten nach der Tauchlackierung oberhalb 150°C die für diese Bauteile benötigte erhöhte Kohäsionsfestigkeit und Adhäsionsfestigkeit generiert. Rein thermoplastische Schmelzklebstoffe würden bei den genannten Temperaturbelastungen bereits thermisch abbauen und somit die mechanischen Eigenschaften des Bauteils negativ beeinflussen. Der beschriebene Schmelzklebstoff zeigt generell sehr gute Affinitäten zu metallischen Werkstoffen und kommt in den Hybridbauteilen als Haftvermittler zwischen dem Metall und dem Polymer zum Einsatz.

Laut EP1808468 wird durch den eingesetzten reaktiven Schmelzklebstoff auch die Korrosionsbeständigkeit verbessert, indem Schwindungsunterschiede zwischen dem metallischen Werkstoff und der Spritzgussmasse ausgeglichen werden und dadurch eine korrosionsanfällige Spaltbildung vermieden wird.

Das in EP1808468 beschriebene Primersystem wirkt insbesondere bei polaren Spritzgussmassen wie Polyamid 6 oder 66. Bei in zunehmendem Maße aufkommenden, unpolaren Spritzgussmassen wie beispielsweise langglasfaserverstärktem Polypropylen steht bedingt durch den Polaritätsunterschied unzureichende Haftung zu erwarten. Außerdem findet bei Hybridbauteilen mit solchen unpolaren Spritzgussmassen keine KTL-Behandlung statt, weshalb die durch die KTL-Bedingungen erzielbare erhöhte Kohäsions- und Adhäsionsfestigkeit entfällt. Die Aufgabe bestand daher in der Entwicklung eines Haftvermittlersystems, das gute Haftung zu Polyolefinspritzgussmassen auch ohne KTL-Behandlung (mehr als 25 Minuten nach der Tauchlackierung oberhalb 150°C) erfüllt.

Es wurde nun überraschend, gemäß den Ansprüchen, gefunden, dass durch den Zusatz von funktionalisierten Polyolefinen zu den in EP1808468 beschriebenen reaktiven Klebstoffen auf Copolyamid-Basis, die zusätzlich Isocyanat und Epoxid enthalten, diese Aufgabe erfüllt wird.

Dazu wird den in EP1808468 beschriebenen Pulvermischungssystemen auf Basis eines Laurinlactam enthaltenden Copolyamids mit einem Anteil von 2,5 bis 15%, vorzugsweise 4 bis 6%, eines blockierte Isocyanats sowie 2,5 bis 10%, vorzugsweise 4 bis 7,5%, besonders bevorzugt 4 bis 6% eines Epoxids zusätzlich mit 10 bis 60%, vorzugsweise 20 bis 50%, eines funktionalisierten Polyolefinpulvers versetzt. Grundsätzlich können die beschriebenen Pulvermischungen auch in Lackformulierungen eingesetzt werden.

Das funktionalisierte Polyolefin ist im einfachsten Fall polypropylenbasiert. Es eignen sich aber auch Etylen / C₃- bis C₁₂-α-Olefin-Copolymere. Als C₃- bis C₁₂-α-Olefin wird beispielsweise Propen, 1-Buten, 1-Penten 1-Hexen, 1-Octen, 1-Decen oder 1-Dodecen eingesetzt. Weiterhin können die Etylen / C₃- bis C₁₂-α-Olefin-Copolymere auch bis maximal etwa 10 Gew.-% Olefindiene wie beispielsweise Ethylidennorbomen oder 1,4-Hexadien enthalten. Als Funktionalisierung dienen bevorzugt Säureanhydridgruppierungen, die auf bekannte Weise durch thermische oder radikalische Reaktionen des Hauptkettenpolymers mit einem ungesättigten Dicarbonsäureanhydrid oder einer ungesättigten Dicarbonsäure eingebracht werden. Geeignete Reagenzien sind beispielsweise Maleinsäureanhydrid oder Itaconsäureanhydrid. Auf diese Weise werden 0,1 bis 4 Gew.-% aufgepropft, was auch zusammen mit einem weiteren Monomer wie beispielsweise Styrol erfolgen kann.

Die Verwendung von maleinsäuregepfropten Polyolefinen hat weite Verbreitung für industrielle Anwendungen gefunden, insbesondere für schlagzähe Modifikationen oder als Verträglichkeitsvermittler in Blends und mechanisch verstärkten Systemen (Polymer, 2001, 42, 3649-3655 und zitierte Literatur). Genannte Quelle beschreibt beispielhaft auch die Herstellung derartiger funktionalisierter Polyolefine.

Einen typischen Vertreter für ein funktionalisiertes Polyolefin stellt das polypropylenbasierte, säureanhydridgepfropfte Admer QB 520 E (Mitsui Chemicals) dar. Prinzipiell einsetzbar sind auch leichter fließende, mit Maleinsaure gepfropfte Polypropylene der Fa. Kometra (z.B. SCONA TPPP 8012).

Eine weitere Funktionalisierungsmöglichkeit besteht in der Schmelzemischung unfunktionalisierter Polyolefine mit reaktiven Verträglichkeitsvermittlern, die Epoxid - oder Carbonsäureanhydridgruppierungen enthalten. Typische Beispiele stellen Copolymerisate bestehend aus Ethylen, einem oder mehreren nicht reaktiven acrylischen Monomeren mit Maleinsäureanhydrid oder Glycidylmethacrylat dar.

Die modifizierte Polyolefinkomponente wird bevorzugt in vermahlener Form in der reaktiven Schmelzkleberpulvermischung eingesetzt. Prinzipiell ist es aber auch möglich, die Copolyamidkomponente mit dem funktionalisierten Polyolefin in der Schmelze zu mischen, anschließend zu vermahlen und mit Epoxid- und Isocyanatpulver zu vermengen.

Das Anwendungsverfahren zeichnet sich dadurch aus, dass ein Metallprofil zunächst mit einem Copolyamid-Schmelzklebstoff vollflächig oder partiell mittels elektrostatischer Sprühpistole bzw. über ein geeignetes Lacksystem beschichtet wird und anschließend auf ca. 150°C über einen Zeitraum von 120 bis 300 Sekunden, bevorzugt ca. 150 Sekunden, erhitzt wird, um den Klebstoff anzuschmelzen. Als Folgeschritt wird eine Polymerstruktur mittels Spritzgusstechnologie eingespritzt.

Die erfindungsgemäßen Hybridbauteile finden Anwendung im Fahrzeugbau, in der Luftfahrtindustrie, im Schienenbau usw., typische Anwendung ist im Bereich von Front-Ends (Stossfängem) oder Dachrahmen zu finden.

### Beispiel

Ein typisches Beispiel einer Pulvermischung ist folgendermaßen zusammengesetzt:
- 45% VESTAMELT X1027
- 7,5% VESTAGON BF 1320
- 7,5% Araldit GT7004
- 40% Admer QB 520 E

Die Einsatzstoffe wurden im ersten Schritt jeweils in einer Alpine-Stiftmühle kalt gemahlen, mit Hilfe eines Sweco-Luftstrahlsiebs fraktioniert (Kornband bis 80 µm) und mittels Diosna-Schnellmischer vermengt.

Mittels elektrostatischer Sprühpistole wurden dann U-Stahl-Bleche mit der reaktiven Pulvermischung beschichtet und für 150 Sekunden bei 150°C behandelt.

Die Metallteile sollten vor der Beschichtung entfettet werden, um gleichmäßige Oberflächen vorzuweisen und eine Streuung in den Haftwerten zu minimieren. Weiterhin ist eine Vorwärmung der Metallteile auf 60 bis 80°C für die Benetzung von Vorteil.

Schließlich erfolgte die Herstellung von Hybridbauteilen an einer Spritzgießmaschine von KrausMaffei (Typ LM125-390-160CZ), wobei Stamax 30YM240 (PP-LGF30 der Fa. Sabic) als Kunststoffkomponente eingespritzt wurde. Als Vergleich wurden auch Hybridbauteile mit unbeschichteten Blechen hergestellt.

An den gewonnenen Hybridbauteilen wurden dann Torsionsversuche durchgeführt (Prüfmittel: Drehzylinder Fa. Schenck, Typ PD1 F, Fertigungsnr. 1 PKT2920 mit Drehmomentaufnehmer Typ PM1 DF, Mₘₐₓ = 1 kNm, Winkelaufnehmer Typ PDF, Mat.-Nr.:P202039.01, Nennmesswinkel 100°, Steuerelektronik Fa. Schenck Typ S59). Dabei erfolgte eine Belastung mit einer Winkelgeschwindigkeit von 1.5°/s bis zu einem maximalen Verdrehwinkel von ca. 90°. Die dargestellte Steifigkeit wurde durch eine lineare Regression der Momenten/Verdrehwinkel-Kennwerte zwischen 5 Nm und 50 Nm ermittelt. Nachfolgender Vergleich zeigt die enorme Verbesserung der mechanischen Eigenschaften durch Verwendung des erfindungsgemäßen Primersystems (jeweils 3 Probekörper wurden verwendet):

Unbeschichtetes Hybridbauteil:

| Bezeichnung der Probe | max. | Drehwinkel bei Mmax | Steifigkeit zw. |
|---|---|---|---|
| | Moment [Nm] | [°] | 5-25Nm [Nm/°] |
| 1 | 70,1 | 21,7 | 6,1 |
| 2 | 74,7 | 21,8 | 6,6* |
| 3 | 69,0 | 21,2 | 4,5* |

Beschichtetes Hybridbauteil:

| Bezeichnung der Probe | max.Moment [Nm] | Drehwinkel bei Mₘₐₓ [°] | Steifigkeit zw. 5-50Nm [Nm/°] |
|---|---|---|---|
| 4 | 87,4 | 12,5 | 13,7 |
| 5 | 81,6 | 13,9 | 11,8 |
| 6 | 85,8 | 19,0 | 13,9 |

## Patentansprüche

1. Verfahren zur Herstellung von Hybridbauteilen, bestehend aus Metallen und Polymeren,
**dadurch gekennzeichnet,**
**dass** die Metalle mit den Polymeren durch Schmelzklebstoffe auf Copolyamid-Basis, die zusätzlich Isocyanat und Epoxid sowie ein funktionalisiertes Polyolefin enthalten, verbunden werden.

2. Verfahren nach Anspruch 1,
**dadurch gekennzeichnet,**
**dass** ein Copolyamid auf Basis von Laurinlactam eingesetzt wird.

3. Verfahren nach einem der vorhergehenden Ansprüche,
**dadurch gekennzeichnet,**
**dass** der Schmelzklebstoff 2,5 bis 15 % blockiertes Isocyanat und 2,5 bis 10 % Epoxid enthält.

4. Verfahren nach einem der vorhergehenden Ansprüche,
**dadurch gekennzeichnet,**
**dass** der Schmelzklebstoff 10 bis 60 % eines funktionalisierten Polyolefins enthält.

5. Verfahren nach einem der vorhergehenden Ansprüche,
**dadurch gekennzeichnet,**
**dass** ein funktionalisiertes Polyolefin auf Basis Polypropylen, Ethylen sowie C₃- bis C₁₂-α-Olefin-Copolymere eingesetzt wird.

6. Verfahren nach einem der vorhergehenden Ansprüche,
**dadurch gekennzeichnet,**
**dass** für die Funktionalisierung des Polyolefins Säureanhydridgruppierungen verwendet werden.

7. Verfahren nach einem der vorhergehenden Ansprüche,
**dadurch gekennzeichnet,**
**dass** das Metall mit dem Schmelzklebstoff vollflächig oder partiell mittels elektrostatischer Sprühpistole bzw. über geeignete Lacksysteme beschichtet und bei 150 °C zwischen 120 bis 300 Sekunden erhitzt wird.

8. Hybridbauteil hergestellt nach einem der vorhergehenden Ansprüche für den Einsatz im Fahrzeugbau oder Flugzeugbau.

## Claims

1. Process for producing hybrid components composed of metals and polymers,
**characterized**
**in that** the metals are joined to the polymers by means of copolyamide-based hotmelt adhesives which additionally comprise isocyanate and epoxide and also a functionalized polyolefin.

2. Process according to Claim 1,
**characterized**
**in that** a copolyamide based on laurolactam is used.

3. Process according to any of the preceding claims,
**characterized**
**in that** the hotmelt adhesive contains 2.5% to 15% of blocked isocyanate and 2.5% to 10% of epoxide.

4. Process according to any of the preceding claims,
**characterized**
**in that** the hotmelt adhesive contains 10% to 60% of a functionalized polyolefin.

5. Process according to any of the preceding claims,
**characterized**
**in that** a functionalized polyolefin based on polypropylene, ethylene and also C₃ to C₁₂ α-olefin copolymers is used.

6. Process according to any of the preceding claims,
**characterized**
**in that** acid anhydride moieties are used for functionalizing the polyolefin.

7. Process according to any of the preceding claims,
**characterized**
**in that** the metal is coated partially or over the whole area with the hotmelt adhesive, using an electrostatic spray gun and/or via suitable painting systems, and is heated at 150°C for between 120 to 300 seconds.

8. Hybrid component produced according to any of the preceding claims, for use in vehicle construction or aircraft construction.

## Revendications

1. Procédé de fabrication d'éléments hybrides, constitués de métaux et de polymères, **caractérisé en ce que** les métaux sont reliés avec les polymères par des adhésifs thermofusibles à base de copolyamide, qui contiennent également un isocyanate et un époxyde, ainsi qu'une polyoléfine fonctionnalisée.

2. Procédé selon la revendication 1, **caractérisé en ce qu'**un copolyamide à base de laurine-lactame est utilisé.

3. Procédé selon l'une quelconque des revendications précédentes, **caractérisé en ce que** l'adhésif thermofusible contient 2,5 à 15 % d'isocyanate bloqué et 2,5 à 10 % d'époxyde.

4. Procédé selon l'une quelconque des revendications précédentes, **caractérisé en ce que** l'adhésif thermofusible contient 10 à 60 % d'une polyoléfine fonctionnalisée.

5. Procédé selon l'une quelconque des revendications précédentes, **caractérisé en ce qu'**une polyoléfine fonctionnalisée à base de polypropylène, d'éthylène et de copolymères d'α-oléfine en C₃ à C₁₂ est utilisée.

6. Procédé selon l'une quelconque des revendications précédentes, **caractérisé en ce que** des groupes anhydride d'acide sont utilisés pour la fonctionnalisation de la polyoléfine.

7. Procédé selon l'une quelconque des revendications précédentes, **caractérisé en ce que** le métal est revêtu avec l'adhésif thermofusible sur l'ensemble de sa surface ou en partie au moyen d'un pistolet de projection électrostatique ou par un système de laquage approprié, et porté à 150 °C pendant une durée comprise entre 120 et 300 secondes.

8. Élément hybride fabriqué selon l'une quelconque des revendications précédentes, destiné à être utilisé dans la construction d'automobiles ou la construction d'avions.
